# EUROPEAN PATENT APPLICATION

(11) **EP 4 378 569 A1**
(43) Date of publication of application: **05.06.2024**
(21) Application number: 22849283.1
(22) Date of filing: 14.07.2022
(51) Int. Cl.: B01D 63/00, B01D 63/10, B01D 53/22

(54) **SPIRAL MEMBRANE ELEMENT AND MEMBRANE SEPARATION SYSTEM**

(30) Priority: 28.07.2021 JP 2021122998
(71) Applicant: NITTO DENKO CORPORATION, Ibaraki-shi Osaka 567-8680 (JP)
(72) Inventor: KATAGIRI Makoto, Ibaraki-shi, Osaka 567-8680 (JP); NAKAMURA Yoshihiro, Ibaraki-shi, Osaka 567-8680 (JP); NISHIYAMA Shinya, Ibaraki-shi, Osaka 567-8680 (JP)
(74) Representative: Hoffmann Eitle
(86) International application number: PCT/JP2022/027761
(87) International publication number: WO 2023/008220

(57) **Abstract**

The present invention provides a spiral membrane element suitable for suppressing a decrease in a permeation rate of a permeated fluid from a separation membrane. The spiral membrane element 10 of the present invention includes a central tube 21 and a separation membrane 12 that is wound around the central tube 21. The central tube 21 has an opening 30 for guiding, to an inside of the central tube 21, a permeated fluid having permeated through the separation membrane 12. The opening 30 extends in a longitudinal direction X of the central tube 21.

## Description

### TECHNICAL FIELD

The present invention relates to a spiral membrane element and a membrane separation system.

### BACKGROUND ART

A membrane separation method has been developed as a method for separating an acid gas such as carbon dioxide from a gas mixture containing the acid gas. The membrane separation method allows an efficient separation of an acid gas with a suppressed operation cost, compared with an absorption method according to which an acid gas contained in a gas mixture is absorbed by an absorbent to be separated.

A spiral membrane element is used for the membrane separation method, for example. The spiral membrane element includes a central tube and a separation membrane that is wound around the central tube. The spiral membrane element is suitable for allowing the separation membrane to have an increased membrane area in the membrane element.

In the spiral membrane element, the central tube has an opening formed therein for guiding, to an inside of the central tube, a permeated fluid having permeated through the separation membrane. As an example, Patent Literature 1 discloses a spiral membrane element including a central tube provided with a circular through hole.

### CITATION LIST

### Patent Literature

Patent Literature 1: JP 2016-137462 A

### SUMMARY OF INVENTION

### Technical Problem

A permeation rate of the permeated fluid from the separation membrane tends to be lower in the spiral membrane element than a permeation rate of the permeated fluid from the separation membrane that is the same but in the state of a flat membrane. That is, the use of the separation membrane in the spiral membrane element tends to decrease the permeation rate of the permeated fluid from the separation membrane.

Therefore, the present invention is intended to provide a spiral membrane element suitable for suppressing a decrease in a permeation rate of a permeated fluid from a separation membrane.

### Solution to Problem

As a result of intensive studies, the present inventors newly found that a decrease in a permeation rate of a permeated fluid in a spiral membrane element is due to a pressure loss of a central tube. The present inventors made further studies on the basis of this finding and have completed the present invention.

The present invention provides a spiral membrane element including:
a central tube; and
a separation membrane that is wound around the central tube, wherein
the central tube has an opening for guiding, to an inside of the central tube, a permeated fluid having permeated through the separation membrane, and
the opening extends in a longitudinal direction of the central tube.

The present invention further provides a membrane separation system including:
the above-mentioned spiral membrane element; and
a decompression device that decompresses the inside of the central tube.

### Advantageous Effects of Invention

The present invention can provide a spiral membrane element suitable for suppressing a decrease in a permeation rate of a permeated fluid from a separation membrane.

### BRIEF DESCRIPTION OF DRAWINGS

FIG. 1 is a developed perspective view illustrating schematically a spiral membrane element according to one embodiment of the present invention.
FIG. 2 is a perspective view of a central tube included in the spiral membrane element.
FIG. 3A is a developed view showing an example of the central tube.
FIG. 3B is a developed view showing another example of the central tube.
FIG. 3C is a developed view showing still another example of the central tube.
FIG. 3D is a developed view showing still another example of the central tube.
FIG. 3E is a developed view showing still another example of the central tube.
FIG. 4 illustrates dimensions of the central tube and an opening.
FIG. 5 is a schematic cross-sectional view of the spiral membrane element.
FIG. 6 is a schematic cross-sectional view illustrating a separation membrane included in the spiral membrane element.
FIG. 7 is a diagram for explaining a method for producing the spiral membrane element.
FIG. 8 is a diagram for explaining a method for producing the spiral membrane element.
FIG. 9 is a configuration diagram of a membrane separation system including the spiral membrane element.
FIG. 10A is a perspective view of a central tube included in a conventional spiral membrane element.
FIG. 10B is a developed view of the central tube shown in FIG. 10A.

### DESCRIPTION OF EMBODIMENTS

A spiral membrane element according to a first aspect of the present invention includes:
a central tube; and
a separation membrane that is wound around the central tube, wherein
the central tube has an opening for guiding, to an inside of the central tube, a permeated fluid having permeated through the separation membrane, and
the opening extends in a longitudinal direction of the central tube.

According to a second aspect of the present invention, for example, in the spiral membrane element according to the first aspect, the opening has a rectangular shape.

According to a third aspect of the present invention, for example, in the spiral membrane element according to the first or second aspect, the opening has an aspect ratio R satisfying 1 < R ≤ 1000.

According to a fourth aspect of the present invention, for example, in the spiral membrane element according to any one of the first to third aspects, the opening has a maximum length of 1 mm to 10 mm in a circumferential direction of the central tube.

According to a fifth aspect of the present invention, for example, in the spiral membrane element according to any one of the first to fourth aspects, the central tube has a plurality of the openings.

According to a sixth aspect of the present invention, for example, in the spiral membrane element according to the fifth aspect, the openings are arranged in a circumferential direction of the central tube.

According to a seventh aspect of the present invention, for example, in the spiral membrane element according to the fifth or sixth aspect, the number of the openings that the central tube has is 2 to 64.

According to an eighth aspect of the present invention, for example, the spiral membrane element according to any one of the first to seventh aspects includes a membrane leaf having the separation membrane and a permeation spacer, wherein the membrane leaf is wound around the central tube.

According to a ninth aspect of the present invention, for example, in the spiral membrane element according to the eighth aspect, the membrane leaf has two pieces of the separation membranes, and the two pieces of the separation membranes are stacked with each other and sealed in such a manner as to have a bag-like structure.

According to a tenth aspect of the present invention, for example, in the spiral membrane element according to the ninth aspect, the permeation spacer is disposed between the two pieces of the separation membranes.

According to an eleventh aspect of the present invention, for example, the spiral membrane element according to any one of the eighth to tenth aspects further includes a feed spacer laminated on the membrane leaf.

According to a twelfth aspect of the present invention, for example, the spiral membrane element according to any one of the eighth to eleventh aspects further includes a flow passage spacer that is connected to the permeation spacer and is wound around the central tube on a side closer to the central tube than the membrane leaf is.

According to a thirteenth aspect of the present invention, for example, in the spiral membrane element according to the twelfth aspect, the flow passage spacer is in contact with the opening.

According to a fourteenth aspect of the present invention, for example, in the spiral membrane element according to any one of the first to thirteenth aspects, the separation membrane has: a separation functional layer; a porous support member supporting the separation functional layer; and an intermediate layer that is disposed between the separation functional layer and the porous support member.

According to a fifteenth aspect of the present invention, for example, the spiral membrane element according to any one of the first to fourteenth aspects is used for processing a gas.

According to a sixteenth aspect of the present invention, for example, the spiral membrane element according to any one of the first to fifteenth aspects is used for separating carbon dioxide from a gas mixture containing carbon dioxide and nitrogen.

A membrane separation system according to a seventeenth aspect of the present invention includes the spiral membrane element according to any one of the first to sixteenth aspects, and a decompression device that decompresses the inside of the central tube.

The present invention will be described in detail below. The following description is not intended to limit the present invention to a specific embodiment.

### <Embodiment of spiral membrane element>

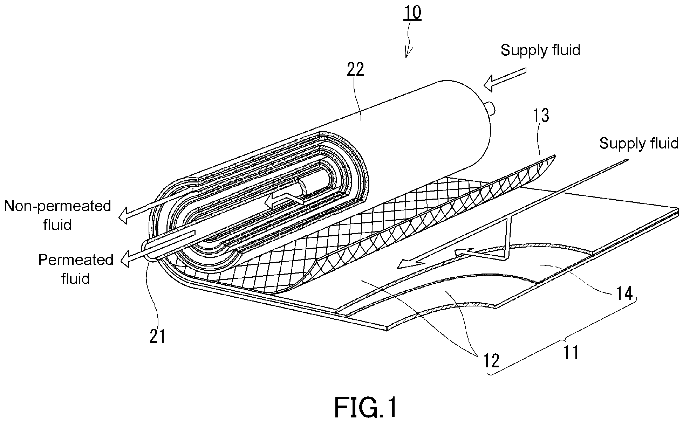

FIG. 1 illustrates a spiral membrane element 10 (hereinafter referred to as a "separation membrane element 10") according to one embodiment of the present invention. The separation membrane element 10 includes a central tube 21 and a laminate 22 having a separation membrane 12. The laminate 22 (with the separation membrane 12) is wound around the central tube 21 and disposed around the central tube 21. In an inside of the laminate 22, a feed fluid flow passage and a permeated fluid flow passage are formed.

A feed fluid is supplied from one end face of the laminate 22 to an inside of the separation membrane element 10 and flows, in parallel with a longitudinal direction of the central tube 21, through the feed fluid flow passage. In the separation membrane element 10, the feed fluid is divided by the separation membrane 12 to generate a permeated fluid and a non-permeated fluid. The permeated fluid is guided to an outside via the central tube 21. The non-permeated fluid is discharged to an outside of the separation membrane element 10 from another end face of the laminate 22.

The feed fluid to be processed by the separation membrane element 10 may be a gas or a liquid. In one example, the feed fluid is a gas mixture containing an acid gas, particularly a gas mixture containing carbon dioxide and nitrogen.

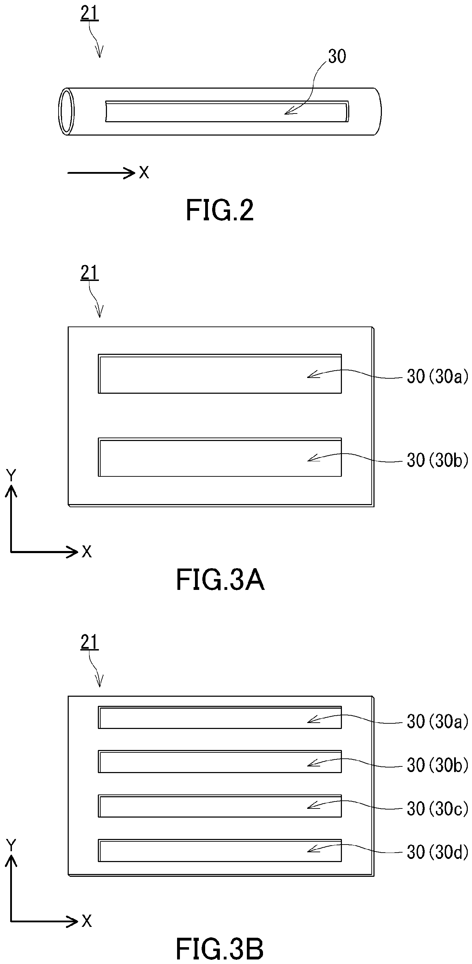

As shown in FIG. 2, the central tube 21 typically has a cylindrical shape, particularly a circular cylindrical shape. The central tube 21 has an opening 30 for guiding, to an inside of the central tube 21, the permeated fluid having permeated through the separation membrane 12. The opening 30 extends in a longitudinal direction X of the central tube 21. That is, the opening 30 has a maximum length in the longitudinal direction X. The opening 30 is formed in a wall surface of the central tube 21 and allow an inner space and an outer space of the central tube 21 to communicate with each other. In other words, the opening 30 penetrates the wall surface of the central tube 21. The central tube 21 serves the role of guiding, to the outside of the separation membrane element 10, the permeated fluid collected through the opening 30.

FIG. 3A is a diagram of the central tube 21 developed in a circumferential direction Y of the central tube 21. As shown in FIG. 3A, the opening 30 typically has a rectangular shape, and may have a rectangular shape with roundish corners. However, the shape of the opening 30 is not limited to a rectangular shape, and it may be a shape such as an elliptical shape extending in the longitudinal direction X or a polygonal shape other than a rectangular shape.

The central tube 21 preferably has a plurality of the openings 30. The number of the openings 30 that the central tube 21 has is 2 or more, for example, and may be 4 or more. The upper limit of the number of the openings 30 is, for example, but not particularly limited to, 64, and it may be 32, 16, or 8. In one example, the number of the openings 30 is 2 to 64, for example, and may be 2 to 8. The openings 30 may or may not be identical in terms of shape and dimensions.

The openings 30 are arranged in the circumferential direction Y of the central tube 21, for example, and preferably arranged in the circumferential direction Y at equal intervals. As understood from the results of Examples to be described later, the central tube 21 having four or more openings 30 arranged in the circumferential direction Y tends to make it possible to further suppress a decrease in a permeation rate of the permeated fluid. The openings 30 may be arranged in the longitudinal direction X of the central tube 21, or may be arranged in the longitudinal direction X of the central tube 21 at equal intervals. In the case where the openings 30 are arranged in the longitudinal direction X, the central tube 21 tends to have enhanced durability. Note, however, that the number of the openings 30 arranged in the longitudinal direction X is preferably 5 or less, and more preferably 3 or less. The openings 30 may be arranged in a grid pattern or in a staggered pattern.

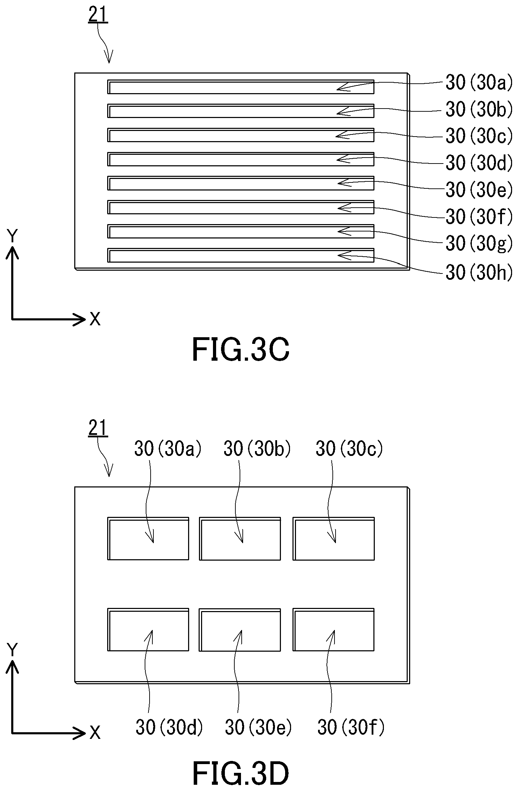

FIG. 3A shows an example in which the central tube 21 has two openings 30a and 30b arranged in the circumferential direction Y In FIG. 3A, the two openings 30a and 30b are identical to each other in terms of shape and dimensions. Similarly, FIG. 3B shows an example in which the central tube 21 has four openings 30a to 30d arranged in the circumferential direction Y In FIG. 3B, the four openings 30a to 30d are identical to each other in terms of shape and dimensions, and furthermore, arranged in the circumferential direction Y at equal intervals. FIG. 3C shows an example in which the central tube 21 has eight openings 30a to 30h arranged in the circumferential direction Y In FIG. 3C, the eight openings 30a to 30h are identical to each other in terms of shape and dimensions, and furthermore, arranged in the circumferential direction Y at equal intervals.

FIG. 3D shows an example in which the central tube 21 has six openings 30a to 30f arranged in a grid pattern. Specifically, the three openings 30a to 30c out of the openings 30a to 30f are arranged in the longitudinal direction X. Also, the three openings 30d to 30f are arranged in the longitudinal direction X. The row composed of the openings 30a to 30c and the row composed of the openings 30d to 30f are arranged in the circumferential direction Y

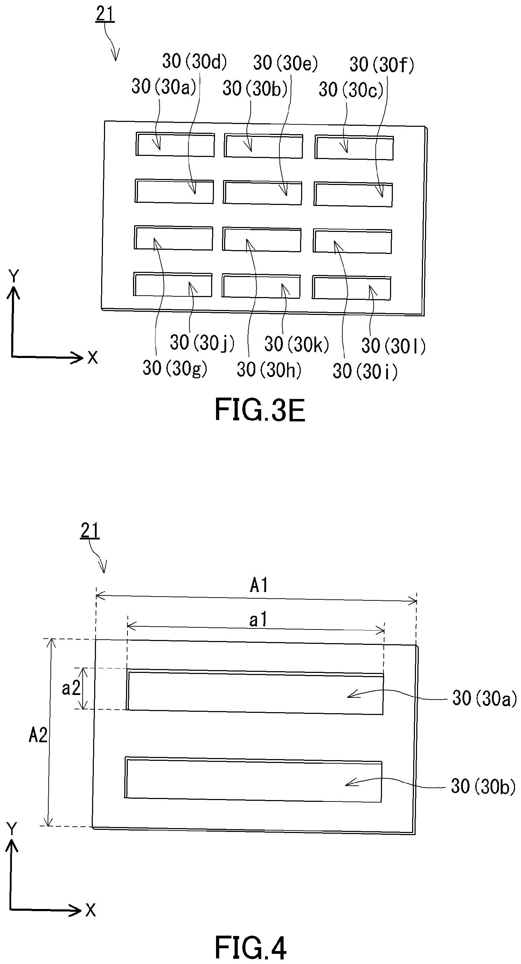

FIG. 3E shows an example in which the central tube 21 has twelve openings 30a to 30l arranged in a grid pattern. Specifically, the three openings 30a to 30c are arranged in the longitudinal direction X, the three openings 30d to 30f are arranged in the longitudinal direction X, the three openings 30g to 30i are arranged in the longitudinal direction X, and furthermore, the three openings 30j to 30l are arranged in the longitudinal direction X. The row composed of the openings 30a to 30c, the row composed of the openings 30d to 30f, the row composed of the openings 30g to 30i, and the row composed of the openings 30j to 30l are arranged in the circumferential direction Y

Examples of a material of the central tube 21 include a metal and a resin. The central tube 21 composed of a metal tends to have excellent durability. The central tube 21 composed of a resin tends to be able to be produced at low cost. Examples of the metal which the central tube 21 is composed of include a stainless steel. Examples of the resin which the central tube 21 is composed of include a noryl resin and an ABS resin, and an ABS resin is preferred. The material of the central tube 21 may be a fiber reinforced plastic (FRP), a plastic, a ceramic, or the like.

As shown in FIG. 4, a length A1 of the central tube 21 in the longitudinal direction X is, for example, but not particularly limited to, 100 mm to 1500 mm, and it is preferably 200 mm to 1200 mm. An outer diameter of the central tube 21 is, for example, but not particularly limited to, 10 mm to 100 mm, and it is preferably 12 mm to 50 mm. A length A2 of the central tube 21 in the circumferential direction Y is, for example, but not particularly limited to, 30 mm to 350 mm, and it is preferably 40 mm to 160 mm. Note that FIG. 4 shows the length A1, etc. of the central tube 21 shown in FIG. 3A as an example.

A maximum length a1 of the opening 30 in the longitudinal direction X is, for example, but not particularly limited to, 10 mm to 1500 mm, and it is preferably 100 mm to 300 mm. A maximum length a2 of the opening 30 in the circumferential direction Y is, for example, but not particularly limited to, 1 mm to 20 mm, and it is preferably 1 mm to 10 mm.

The opening 30 has an aspect ratio R satisfying 1 < R ≤ 1000, for example. The aspect ratio R is preferably 5 or more, and it may be 10 or more, 20 or more, 30 or more, 40 or more, 50 or more, or even 60 or more. The aspect ratio R may be 500 or less, or 100 or less. Note that in the present disclosure, the aspect ratio R of the opening 30 means a ratio of the maximum length a1 (mm) in the longitudinal direction X with respect to the maximum length a2 (mm) in the circumferential direction Y

A ratio P1 of the maximum length a1 (mm) of the opening 30 in the longitudinal direction X with respect to the length A1 (mm) of the central tube 21 in the longitudinal direction X is, for example, but not particularly limited to, 10% or more, and it may be 30% or more, 50% or more, or 70% or more. The upper limit of the ratio P1 is, for example, but not particularly limited to, 90%.

A ratio P2 of the maximum length a2 (mm) of the opening 30 in the circumferential direction Y with respect to the length A2 (mm) of the central tube 21 in the circumferential direction Y is, for example, but not particularly limited to, 50% or less, ant it may be 30% or less, 20% or less, 10% or less, or 5% or less. The lower limit of the ratio P2 is, for example, but not particularly limited to, 1%.

In the case where the central tube 21 has a plurality of the openings 30, a distance between two openings 30 adjacent to each other is, for example, but not particularly limited to, 50 mm or less, and it may be 30 mm or less, 10 mm or less, or 5 mm or less. The lower limit of the distance between two openings 30 adjacent to each other is, for example, but not particularly limited to, 1 mm.

In the central tube 21, a total value B of areas of all the openings 30 is, for example, but not particularly limited to, 1 cm² to 1500 cm², and it is preferably 10 cm² to 200 cm². A ratio P3 of the total value B of areas of all the openings 30 with respect to an area B1 of a principal surface (a surface having the largest area) of the central tube 21 is, for example, but not particularly limited to, 10% or more, and it may be 30% or more, or 50% or more. The upper limit of the ratio P3 is, for example, but not particularly limited to, 70%.

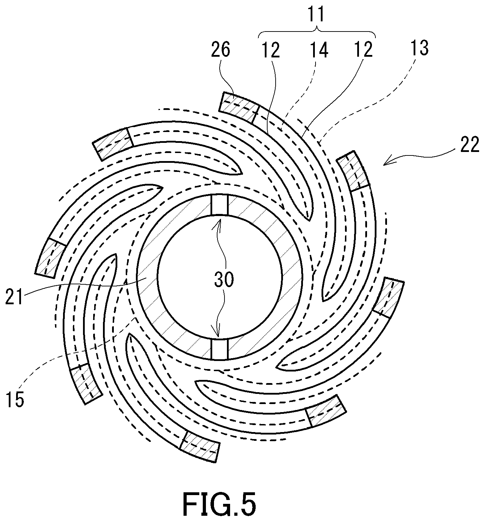

As shown in FIG. 5, the laminate 22 has a plurality of membrane leaves 11. Each of the membrane leaves 11 is wound around the central tube 21. Each of the membrane leaves 11 has a separation membrane 12 and a permeation spacer 14. Specifically, each of the membrane leaf 11 has two pieces of the separation membranes 12. The two pieces of the separation membranes 12 are stacked with each other and sealed on three sides in such a manner as to have a bag-like structure. For the sealing of the two pieces of the separation membranes 12, an adhesive layer 26 including an adhesive is used, for example. The permeation spacer 14 is disposed between the two pieces of the separation membranes 12 in such a manner as to be positioned inside the bag-like structure. The permeation spacer 14 secures, between the two pieces of the separation membrane 12, a space serving as the permeated fluid flow passage. The number of the membrane leaves 11 in the laminate 22 is, for example, but not particularly limited to, 2 to 30.

The laminate 22 further has a feed spacer 13. The feed spacer 13 is positioned outside the above-mentioned bag-like structure and is laminated on the membrane leaf 11. Specifically, the laminate 22 has a plurality of the feed spacers 13, and the plurality of the feed spacers 13 and the plurality of the membrane leaves 11 are laminated alternately in the laminate 22. The feed spacer 13 secures, between the membrane leaf 11 and the membrane leaf 11, a space serving as the feed fluid flow passage.

The separation membrane element 10 further includes a flow passage spacer 15. The flow passage spacer 15 is positioned between the central tube 21 and the laminate 22 and is wound around the central tube 21 on a side closer to the central tube 21 than the laminate 22 (with the membrane leaf 11) is. The flow passage spacer 15 secures, between the laminate 22 and the central tube 21, a space serving as the permeated fluid flow passage. The flow passage spacer 15 is connected to an opening end of the membrane leaf 11 mentioned above. Thereby, the permeation spacer 14 of the membrane leaf 11 is connected to the flow passage spacer 15. The flow passage spacer 15 is in contact with the opening 30 of the central tube 21. Thereby, the permeated fluid can flow from the flow passage spacer 15 to the inside of the central tube 21 through the opening 30.

Examples of each of the feed spacer 13, the permeation spacer 14, and the flow passage spacer 15 include a net, a mesh, a wire woven fabric, a fiber woven fabric, a nonwoven fabric, a recessed sheet, and a corrugated sheet. Examples of a material of each of these spacers 13 to 15 include: a resin material such as polypropylene (PP), polyethylene (PE), polyethylene terephthalate (PET), polyamide, polyphenylene sulfide (PPS), an ethylene-chlorotrifluoroethylene copolymer (ECTFE), an epoxy resin, or a urethane resin; a natural polymer; a rubber; and a metal.

A thickness of each of the spacers 13 to 15 is, for example, but not particularly limited to, 100 µm to 2000 µm. An opening ratio of each of the spacers 13 to 15 is, for example, but not particularly limited to, 10% to 80%. The opening ratio of each of the spacers can be determined by the following method. First, a spacer to be measured is placed on a film and a surface of the spacer is observed with a scanning electron microscope (SEM). From the obtained electron microscope image, an area C1 of the surface of the spacer and an area C2 (an area of a gap formed in the spacer) in which the film can be seen through the spacer are calculated by image processing. The ratio of the area C2 with respect to the area C1 can be determined as the opening ratio of the spacer.

The separation membrane element 10 may further include a shell that surrounds the laminate 22. The shell may be made of FRP. In order to protect the end faces of the laminate 22 and prevent the laminate 22 from extending telescopically, an end face member may be disposed on each of both sides of the laminate 22.

### [Separation membrane]

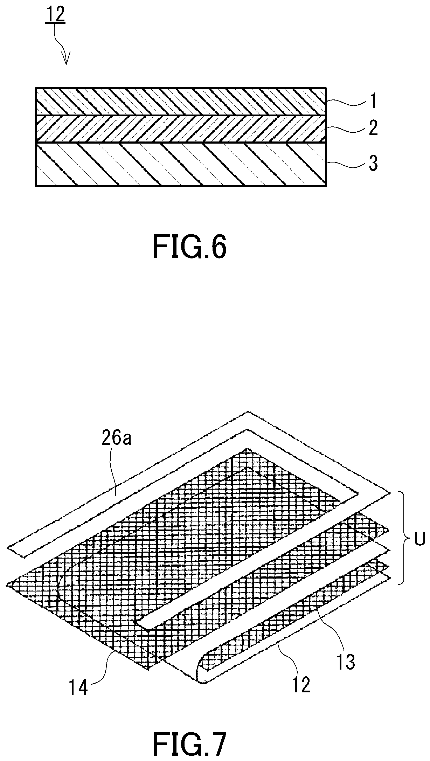

As shown in FIG. 6, the separation membrane 12 includes, for example, a separation functional layer 1, a porous support member 3 supporting the separation functional layer 1, and an intermediate layer 2 that is disposed between the separation functional layer 1 and the porous support member 3. The intermediate layer 2 is, for example, in direct contact with each of the separation functional layer 1 and the porous support member 3.

### (Separation functional layer)

The separation functional layer 1 is, for example, a layer capable of allowing an acid gas contained in a gas mixture to preferentially permeate therethrough. In a preferred embodiment, the separation functional layer 1 includes a resin. Examples of the resin included in the separation functional layer 1 include a polyether block amide resin, a polyamide resin, a polyether resin, a polyimide resin, a cellulose acetate resin, a silicone resin, and a fluorine resin. The separation functional layer 1 preferably includes a polyether block amide resin. In this embodiment, the separation functional layer 1 is preferably composed substantially of a resin. In the present description, the phrase "composed substantially of" means exclusion of other component that alters essential characteristics of a material referred to, and for example means that 95 wt% or more or even 99 wt% or more is composed of the material.

In another preferred embodiment, the separation functional layer 1 includes an ionic liquid. The separation functional layer 1 includes, for example, a double-network gel including an ionic liquid. The double-network gel is a gel including two types of network structures independent from each other. The double-network gel includes, for example, a first network structure composed mainly of an organic material, a second network structure composed mainly of an inorganic material, and an ionic liquid. In the present specification, the phrase "composed mainly of" means that 50 wt% or more or even 70 wt% or more is composed of the material.

The organic material for constituting the first network structure includes, for example, a polymer such as polyacrylamide (particularly, polydialkylacrylamide such as polydimethylacrylamide). The polymer included in the organic material may have a structural unit derived from an acrylamide derivative and may further include a cross-linked structure. The polymer including a cross-linked structure can be produced by a known method. First, a prepolymer having a structural unit having an N-hydroxysuccinimide ester group is prepared, for example. The structural unit having an N-hydroxysuccinimide ester group derives from N-acryloxysuccinimide, for example. Next, the prepolymer is allowed to react with an amine cross linking agent to obtain a polymer including a cross-linked structure. The amine cross linking agent is a compound, such as ethylene glycol bis(3-aminopropyl) ether, having two or more primary amino groups.

The second network structure may include a network of a plurality of particles. The network of the plurality of particles is formed by, for example, the plurality of particles being bonded to each other by hydrogen bonds. The particles included in the second network structure may be particles exemplified as the nanoparticles described later. In one example, the particles included in the second network structure are silica particles.

In the present embodiment, specific examples of the ionic liquid include an ionic liquid having: imidazolium, pyridinium, ammonium, or phosphonium; and a substituent having 1 or more carbon atoms.

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, and an aryl group having 6 to 20 carbon atoms, and these may be each further substituted by a hydroxy group, a cyano group, an amino group, a monovalent ether group, or the like (for example, a hydroxyalkyl group having 1 to 20 carbon atoms).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

A compound having imidazolium and a substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. From the viewpoint of gas separation performance, preferred are bis(fluorosulfonyl)imide, bis(trifluoromethanesulfonyl)imide, dicyanamide, tricyanomethanide, and tetracyanoborate.

Specific examples of the ionic liquid having imidazolium and a substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluenesulfonate, 1-ethyl-3-methylimidazolium tricyanomethanide, and 1-(2-hydroxyethyl)-3-methylimidazolium bis(trifluoromethanesulfonyl)imide.

Among these, from the viewpoint of gas separation performance, particularly preferred are 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-butyl-3-methylimidazolium bis(trifluoromethanesulfonyl)imide ([C₄mim][TF₂N]), and 1-(2-hydroxyethyl)-3-methylimidazolium bis(trifluoromethanesulfonyl)imide ([C₂OHim][TF₂N]).

The method for producing the double-network gel is not particularly limited, and for example, the method disclosed in E. Kamio et al., Adv.Mater, 29, 1704118 (2017) can be used.

A content of the ionic liquid in the double-network gel is, for example, 50 wt% or more, preferably 60 wt% or more, more preferably 70 wt% or more, and still more preferably 80 wt% or more. The higher the content of the ionic liquid is, the more preferentially the separation functional layer 1 can allow the acid gas contained in the gas mixture to permeate therethrough. The upper limit of the content of the ionic liquid is, for example, but not particularly limited to, 95 wt%.

A content of the first network structure composed mainly of an organic material in the double-network gel is, for example, 1 wt% or more, preferably 5 wt% or more, and more preferably 10 wt% or more. The upper limit of the content of the first network structure is 15 wt%, for example. A content of the second network structure composed mainly of an inorganic material in the double-network gel is, for example, 1 wt% or more from the viewpoint of improving the strength of the double-network gel. The upper limit of the content of the second network structure is 5 wt%, for example. The ratio of the total value of the weight of the first network structure and the weight of the second network structure with respect to the weight of the double-network gel is, for example, 2 wt% or more, preferably 5 wt% or more, and more preferably 10 wt% or more. This ratio is preferably 20 wt% or less. In this embodiment, the separation functional layer 1 is preferably composed substantially of the double-network gel.

A thickness of the separation functional layer 1 is, for example, 50 µm or less, preferably 25 µm or less, and more preferably 15 µm or less. In some cases, the thickness of the separation functional layer 1 may be 10 µm or less, 5.0 µm or less, or 2.0 µm or less. The thickness of the separation functional layer 1 may be 0.05 µm or more, or 0.1 µm or more.

### (Intermediate layer)

The intermediate layer 2 includes a resin, for example, and may further include nano particles dispersed in the resin (a matrix). In the matrix, the nanoparticles may be spaced from each other or may aggregate partially. A material of the matrix is not particularly limited, and examples thereof include a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; a polyolefin resin such as polymethylpentene; and a polyurethane resin. The matrix preferably includes at least one selected from the group consisting of a silicone resin and a polyurethane resin, and more preferably includes both a silicone resin and a polyurethane resin.

The nanoparticles may include an inorganic material. The nanoparticles may include an organic material. Examples of the inorganic material included in the nanoparticles include silica, titania, and alumina. The nanoparticles preferably include silica.

A thickness of the intermediate layer 2 is, for example, but not particularly limited to, less than 50 µm, preferably 40 µm or less, and more preferably 30 µm or less. The lower limit of the thickness of the intermediate layer 2 is, for example, but not particularly limited to, 1 µm. The intermediate layer 2 is, for example, a layer having a thickness of less than 50 µm.

### (Porous support member)

The porous support member 3 supports the separation functional layer 1 via the intermediate layer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials.

The porous support member 3 has an average pore diameter of 0.01 to 0.4 µm, for example. A thickness of the porous support member 3 is, for example, but not particularly limited to, 10 µm or more, preferably 20 µm or more, and more preferably 50 µm or more. The thickness of the porous support member 3 is, for example, 300 µm or less, preferably 200 µm or less, and more preferably 150 µm or less.

### [Method for producing separation membrane]

The separation membrane 12 can be produced by the following method, for example. First, a coating liquid containing the materials of the intermediate layer 2 is prepared. Next, the coating liquid containing the materials of the intermediate layer 2 is applied onto the porous support member 3 to form a coating film. The method for applying the coating liquid is not particularly limited, and a spin coating method, a dip coating method, and a gravure coating method can be used, for example. The coating liquid may be applied, for example, using a wire bar. By adjusting concentrations, etc. of the materials of the intermediate layer 2 in the coating liquid, it is possible to adjust the thickness of the intermediate layer 2 to be formed. Next, the coating film is dried to form the intermediate layer 2. The coating film can be dried under heating conditions, for example. The heating temperature of the coating film is, for example, 50°C or higher. The heating time of the coating film is, for example, one minute or longer, and may be five minutes or longer.

A surface of the intermediate layer 2 can be subjected to an adhesion improvement treatment, if necessary. As the adhesion improvement treatment, a surface treatment such as application of a primer, a corona discharge treatment, or a plasma treatment may be provided.

Next, a coating liquid containing the materials of the separation functional layer 1 is prepared. The coating liquid containing the materials of the separation functional layer 1 is applied onto the intermediate layer 2 to obtain a coating film. The coating film is dried to form the separation functional layer 1. The method for applying the coating liquid and the drying conditions can be the same as the method and the conditions described above for the intermediate layer 2. Thus, the separation membrane 12 can be obtained.

The method for producing the separation membrane 12 is not limited to the above method. For example, the separation membrane 12 can be produced by the following method. For example, the coating liquid containing the materials of the separation functional layer 1 is applied onto a transfer film to obtain a coating film. The coating film is dried to form the separation functional layer 1. Next, the coating liquid containing the materials of the intermediate layer 2 is applied onto the separation functional layer 1 and dried to form the intermediate layer 2. The laminate of the intermediate layer 2 and the separation functional layer 1 is transferred to the porous support member 3. Thus, the separation membrane 12 can be obtained.

### [Method for producing spiral membrane element]

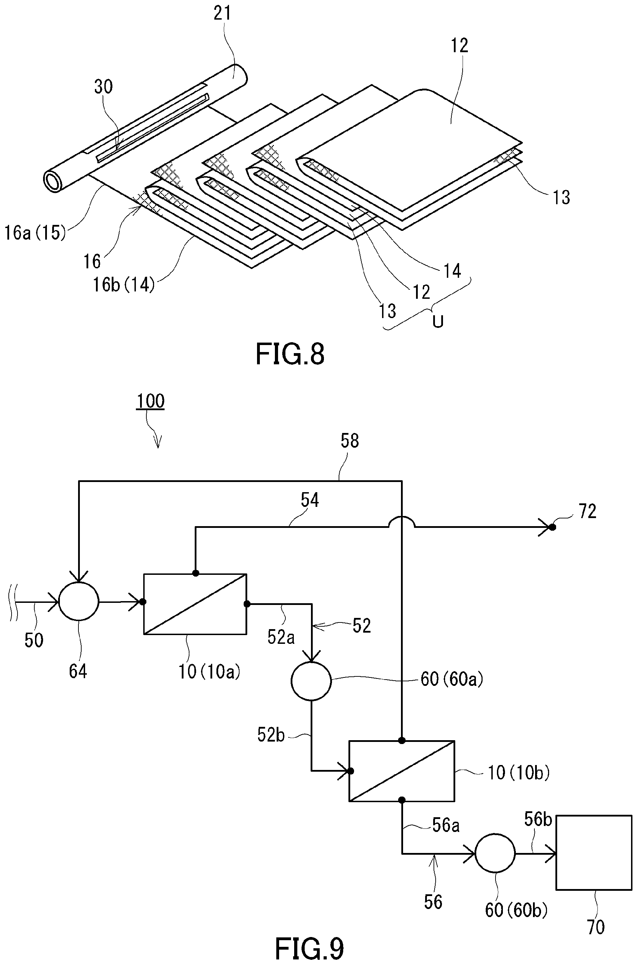

Next, an example of the method for producing the separation membrane element 10 will be described referring to FIGs. 7 and 8. First, as shown in FIG. 7, the separation membrane 12 is folded in half in such a manner that the separation functional layer 1 of the separation membrane 12 is positioned inside. The feed spacer 13 is disposed inside the separation membrane 12 folded in half, and the permeation spacer 14 is disposed on the separation membrane 12. In addition, an adhesive 26a is applied onto three sides of an outer circumferential portion of the permeation spacer 14. Thus, a separation membrane unit U is obtained. The adhesive 26a is in an uncured state at this point.

Next, as shown in FIG. 8, the central tube 21, a spacer 16, and a plurality of the separation membrane units U are prepared. The spacer 16 has, for example, a first portion 16a that is directly wound around the central tube 21, and a second portion 16b that is laminated on the separation membrane unit U. The first portion 16a of the spacer 16 corresponds to the flow passage spacer 15, and the second portion 16b corresponds to the permeation spacer 14. The plurality of the separation membrane units U are placed on the second portion 16b of the spacer 16 and disposed stepwise. The number of the separation membrane units U is, for example, but not particularly limited to, 2 to 30. Note that the separation membrane unit U positioned uppermost may not have the permeation spacer 14.

Next, the first portion 16a of the spacer 16 is wound around the central tube 21. The number of windings of the first portion 16a is, for example, but not particularly limited to, 1 to 15, and preferably 2 to 10.

Next, the separation membrane units U are wound around the central tube 21. At this time, the separation membrane unit U positioned uppermost is laminated on the second portion 16b of the spacer 16. After the separation membrane units U are wound around the central tube 21, the adhesive 26a is cured to form the adhesive layer 26 while the bag-like membrane leaf 11 is formed. Thus, an assembly including the central tube 21 and the laminate 22 is obtained.

The geometry of the spacer 16 is not limited to that shown in FIG. 8. For example, the spacer 16 may further have a third portion (not shown) that is connected to the second portion 16b and extends, from the second portion 16b, on a side opposite to the central tube 21. The third portion is wound around the central tube 21 outside the laminate 22 formed by winding the separation membrane units U around the central tube 21. That is, the third portion can cover the laminate 22 outside the laminate 22. A film (Lumirror 38E20 available from PANAC Co., Ltd., for example) may be disposed between the laminate 22 and the third portion so that the feed spacer 13 of the laminate 22 is out of contact with the third portion.

### [Properties of spiral membrane element]

In the spiral membrane element, the membrane separation of the feed fluid by the separation membrane proceeds by utilizing a difference (a pressure difference) between the pressure of the feed fluid and the pressure of the permeated fluid as a driving force. Therefore, a pressure loss caused in the spiral membrane element reduces the above-mentioned pressure difference and decreases the permeation rate of the permeated fluid from the separation membrane. Particularly, a reduction in the pressure difference due to the pressure loss has a large impact in a method (a decompression method) according to which the spiral membrane element is operated by decompressing the inside of the central tube because the pressure difference tends to be smaller than in a method (a pressurization method) according to which the spiral membrane element is operated by pressurizing the feed fluid.

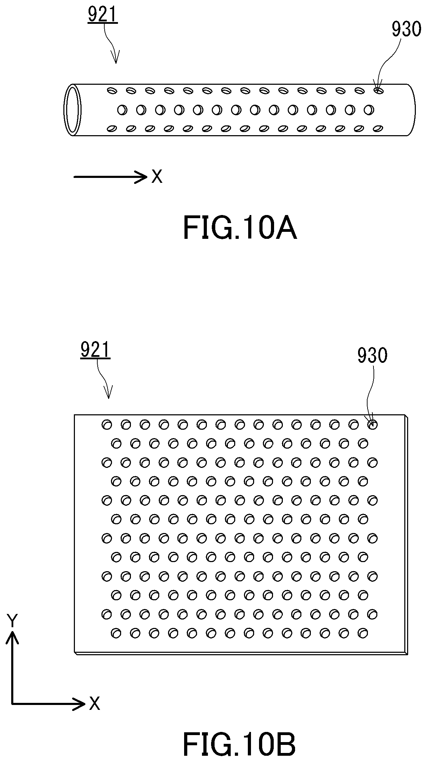

As shown in FIGs. 10A and 10B, a central tube 921 included in a conventional spiral membrane element is usually provided with a circular through hole 930. Specifically, a plurality of the through holes 930 are arranged in a longitudinal direction X of the central tube 921. As shown in FIG. 10B, the through holes 930 are disposed in a staggered pattern in some cases. In the case where a spiral membrane element including the central tube 921 as just mentioned is used, a permeated fluid having reached a wall surface of the central tube 921 tends to travel, along the wall surface, not only in a circumferential direction Y but also in the longitudinal direction X up to the through holes 930. According to the studies by the present inventors, when the permeated fluid travels in the longitudinal direction X along the wall surface of the central tube 921, a pressure loss tends to increase significantly due to a flow resistance of the permeated fluid.

In contrast, in the separation membrane element 10 of the present embodiment, the opening 30 extends in the longitudinal direction X of the central tube 21. Such a configuration can inhibit the permeated fluid having reached the wall surface of the central tube 21 from traveling in the longitudinal direction X along the wall surface of the central tube 21. This suppresses an increase in the pressure loss, making it possible to suppress a reduction in the pressure difference between the feed fluid and the permeated fluid. The separation membrane element 10 of the present embodiment makes it possible to suppress sufficiently a decrease in the permeation rate of the permeated fluid from the separation membrane 12 by suppressing the reduction in the pressure difference.

For example, in the case of using carbon dioxide as the feed fluid, a ratio R1 of a permeation rate T2 (GPU) of the carbon dioxide from the separation membrane element 10 when the separation membrane element 10 is operated according to the pressurization method with respect to a permeation rate T1 (GPU) of the carbon dioxide from the separation membrane 12 that is in the state of a flat membrane when the separation membrane 12 that is in the state of a flat membrane is operated according to the decompression method is, for example, 90% or more, and preferably 95% or more.

In the operation according to the decompression method for determining the permeation rate T1, the feed fluid to be supplied to the separation membrane 12 that is in the state of a flat membrane has a temperature of 23°C and a pressure of 0.1 MPa. In the decompression method, a space where the permeated fluid is obtained is decompressed to approximately 10 kPa or less using a vacuum pump. Note that GPU means 10⁻⁶•cm³(STP)/(sec•cm²•cmHg). The symbol "cm³(STP)" means the volume of carbon dioxide at 1 atmospheric pressure and 0°C.

In the operation according to the pressurization method for determining the permeation rate T2, the feed fluid to be supplied to the separation membrane element 10 has a temperature of 23°C. The feed fluid has a pressure of 0.1 MPa, 0.3 MPa, or 0.5MPa. In the pressurization method, the pressure in a space (a space in the permeated fluid flow passage) where the permeated fluid is obtained is equal to an atmospheric pressure (101 kPa, for example) in the measurement environment.

When each of the separation membrane element 10 and the separation membrane 12 that is in the state of a flat membrane is operated according to the decompression method using carbon dioxide as the feed fluid, a ratio R2 of a permeation rate T3 (GPU) of the carbon dioxide from the separation membrane element 10 with respect to the permeation rate T1 (GPU) of the carbon dioxide from the separation membrane 12 that is in the state of a flat membrane is, for example, 83.5% or more, and it may be 84% or more, or even 88% or more. Operating conditions of the decompression method for determining the permeation rate T3 are the same as those mentioned above for the permeation rate T1.

As described above, the separation membrane element 10 of the present embodiment makes it possible to suppress sufficiently a decrease in the permeation rate of the permeated fluid from the separation membrane 12 even in the case where the pressure difference between the feed fluid and the permeated fluid is set small. In one example, in the separation membrane element 10, the pressure difference between the feed fluid and the permeated fluid can be set, for example, to 500 kPa or less, preferably to 400 kPa or less, more preferably to 300 kPa or less, still more preferably to 200 kPa or less, and particularly preferably to 100 kPa or less. When the pressure difference between the feed fluid and the permeated fluid is small to this extent, a spacer, such as the flow passage spacer 15, is less likely to enter the opening 30 of the central tube 21. Furthermore, in this case, deformation and damage are less likely to occur in the central tube 21.

As the use of the separation membrane element 10 of the present embodiment, there can be mentioned the use for processing a gas, especially the use for separating an acid gas from a gas mixture containing the acid gas. The acid gas in the gas mixture is, for example, carbon dioxide, hydrogen sulfide, carbonyl sulfide, sulfur oxide (SOx), hydrogen cyanide, and nitrogen oxide (NOx), and is preferably carbon dioxide. The gas mixture contains a gas other than the acid gas. The other gas is, for example, a nonpolar gas such as hydrogen or nitrogen or an inert gas such as helium, and is preferably nitrogen. Particularly, the separation membrane element 10 of the present embodiment is suitably used for separating carbon dioxide from a gas mixture containing carbon dioxide and nitrogen. However, the use of the separation membrane element 10 is not limited to the use for separating an acid gas from the above-mentioned gas mixture.

Patent Literature 1 describes that a wall surface of a central tube of a spiral membrane element may be provided with a slit along an axial direction of the central tube. However, the slit of Patent Literature 1 is only intended to maintain fixation of a member for a permeated gas flow passage by holding a tip end portion of the member for a permeated gas flow passage. In Patent Literature 1, the slit has no function to guide a permeated fluid to an inside of the central tube and is completely different from the opening 30 of the central tube 21 in the present embodiment.

### <Embodiment of membrane separation system>

As shown in FIG. 9, a membrane separation system 100 of the present embodiment includes the separation membrane element 10 mentioned above and a decompression device 60. The decompression device 60 can decompress the inside of the central tube 21 of the separation membrane element 10. In other words, the decompression device 60 can cause a pressure difference or increase a pressure difference between a space in the feed fluid flow passage and a space in the permeated fluid flow passage in the separation membrane element 10. A specific example of the decompression device 60 is a vacuum device such as a vacuum pump. The membrane separation system 100 may include two separation membrane elements 10a and 10b and two decompression devices 60a and 60b.

The membrane separation system 100 further includes a fluid mixture feed passage 50. The fluid mixture feed passage 50 is a passage connected to a fluid mixture inlet of the separation membrane element 10a and configured to feed a fluid mixture to the separation membrane element 10a from, for example, a tank (not shown) storing the fluid mixture. The fluid mixture feed passage 50 may or may not be provided with a pressurization device 64 that pressurizes a space in a feed fluid passage of the separation membrane element 10a. Examples of the pressurization device 64 include a compressor, a blower, and a back pressure valve. The pressurization device 64 can pressurize the space in the feed fluid passage of the separation membrane element 10a by, for example, increasing the pressure of the fluid mixture to be supplied to the separation membrane element 10a.

The membrane separation system 100 further includes a permeated fluid feed passage 52. The permeated fluid feed passage 52 is a passage connected to a permeated fluid outlet of the separation membrane element 10a and a permeated fluid inlet of the separation membrane element 10b and configured to feed, from the separation membrane element 10a to the separation membrane element 10b, the permeated fluid from the separation membrane element 10a. The permeated fluid from the separation membrane element 10a is further processed in the separation membrane element 10b. The permeated fluid feed passage 52 is provided with the decompression device 60a.

The permeated fluid feed passage 52 has a first portion 52a extending from the separation membrane element 10a to the decompression device 60a and a second portion 52b extending from the decompression device 60a to the separation membrane element 10b. The decompression device 60a can decompress a space in a permeated fluid passage of the separation membrane element 10a via the first portion 52a. The decompression device 60a draws the permeated fluid having passed through the first portion 52a and discharges the permeated fluid to the second portion 52b, for example. The second portion 52b may or may not be provided with a pressurization device (not shown) that increases the pressure of the permeated fluid discharged from the decompression device 60a. This pressurization device can pressurize a space in a feed fluid passage of the separation membrane element 10b. Examples of the pressurization device include a compressor, a blower, and a back pressure valve.

The membrane separation system 100 further includes a first discharge passage 54. The first discharge passage 54 is a passage connected to a non-permeated fluid outlet of the separation membrane element 10a and configured to discharge the non-permeated fluid from the separation membrane element 10a. In the first discharge passage 54, an opening (a discharge outlet 72) for discharging the non-permeated fluid from the first discharge passage 54 is formed. The membrane separation system 100 may further include a tank (not shown) that stores the non-permeated fluid, and the first discharge passage 54 may be connected to the tank.

The membrane separation system 100 further includes a second discharge passage 56 and a tank 70. The second discharge passage 56 is a passage connected to a permeated fluid outlet of the separation membrane element 10b and an inlet of the tank 70 and configured to deliver the permeated fluid from the separation membrane element 10b to the tank 70. The tank 70 can store the permeated fluid delivered from the separation membrane element 10b. The second discharge passage 56 is provided with the second decompression device 60b.

The second discharge passage 56 has a first portion 56a extending from the separation membrane element 10b to the decompression device 60b and a second portion 56b extending from the decompression device 60b to the tank 70. The decompression device 60 can decompress a space in a permeated fluid passage of the separation membrane element 10b via the first portion 56a. The decompression device 60b draws the permeated fluid having passed through the first portion 56a and discharges the permeated fluid to the second portion 56b, for example.

The membrane separation system 100 further includes a third discharge passage 58. The third discharge passage 58 is a passage connected to a non-permeated fluid outlet of the separation membrane element 10b and configured to discharge the non-permeated fluid from the separation membrane element 10b. The third discharge passage 58 may join the fluid mixture feed passage 50. In FIG. 9, the third discharge passage 58 is connected to the pressurization device 64 and joins the fluid mixture feed passage 50 at the pressurization device 64. When the third discharge passage 58 joins the fluid mixture feed passage 50, it is possible, for example, to recycle the non-permeated fluid containing the acid gas that the separation membrane element 10b has failed to separate.

Each passage of the membrane separation system 100 is formed of, for example, a metal or resin pipe.

According to the membrane separation system 100 of the present embodiment, it is possible to decompress the space in the permeated fluid passage of the separation membrane element 10 by the decompression device 60 and carry out a separating operation. Such a separating operation according to the decompression method is more suitable for reducing the energy required to separate the fluid mixture than the pressurization method.

### EXAMPLES

Hereinafter, the present invention will be described in more detail by way of Examples and Comparative Example, but the present invention is not limited to these examples.

### (Example 1)

### [Production of separation membrane]

First, a coating liquid containing a silicone resin and a polyurethane resin at a weight ratio of 9:1 was prepared. The coating liquid contained water as a solvent. Next, the coating liquid was applied onto a porous support member by a gravure coating method to obtain a coating film. As the porous support member, a UF membrane (ultrafiltration membrane) RS-50 (a laminate of a PVDF porous layer and a PET nonwoven fabric) available from Nitto Denko Corporation was used. The obtained coating film was dried to form an intermediate layer.

Next, 2 g of polyether block amide (Pebax MH1657 available from Arkema S.A.) was put in 98 g of a 70 wt% isopropanol aqueous solution and the resultant mixture was stirred at 80°C for 3 hours to prepare a 2 wt% Pebax solution. Next, the prepared solution was applied onto the intermediate layer by a gravure coating method. Next, the obtained coating film was dried to form a separation functional layer. Thus, a separation membrane was obtained.

### [Production of spiral membrane element]

First, a central tube made of a stainless steel (SUS) presenting the developed view shown in FIG. 3B was prepared. The central tube had the length A1 of 300mm in the longitudinal direction X, the length A2 of 54.3mm in the circumferential direction Y, and an outer diameter of 17.3 mm. This central tube had four openings each extending in the longitudinal direction X of the central tube. The four openings were identical to each other in terms of shape and dimensions, and were arranged in the circumferential direction Y of the central tube at equal intervals. The openings had a rectangular shape. The openings had the maximum length a1 of 130 mm in the longitudinal direction X, the maximum length a2 of 4.2 mm in the circumferential direction Y, and the aspect ratio R of 30.95. The distance between two openings thereof adjacent to each other was 9.375 mm. The total value B of areas of all the openings was 21.84 cm². Next, a spiral membrane element of Example 1 was produced using the above-mentioned central tube and separation membrane by the method explained with reference to FIGs. 7 and 8. As the permeation spacer, #1000E available from KB SEIREN LTD. was used. As the feed spacer, 34mil available from TOKYO PRINTING INK MFG. CO., LTD. was used.

### (Example 2)

A spiral membrane element of Example 2 was produced in the same manner as in Example 1, except that a central tube made of a stainless steel (SUS) presenting the developed view shown in FIG. 3C was used. The central tube used in Example 2 had eight openings each extending in the longitudinal direction X of the central tube. The eight openings were identical to each other in terms of shape and dimensions, and were arranged in the circumferential direction Y of the central tube at equal intervals. The openings had a rectangular shape. The openings had the maximum length a1 of 130 mm in the longitudinal direction X, the maximum length a2 of 2.1 mm in the circumferential direction Y, and the aspect ratio R of 61.90. The distance between two openings thereof adjacent to each other was 4.69 mm. The total value B of areas of all the openings was 21.84 cm².

### (Example 3)

A spiral membrane element of Example 3 was produced in the same manner as in Example 1, except that a central tube made of a stainless steel (SUS) presenting the developed view shown in FIG. 3A was used. The central tube used in Example 3 had two openings each extending in the longitudinal direction X of the central tube. The two openings were identical to each other in terms of shape and dimensions, and were arranged in the circumferential direction Y of the central tube at equal intervals. The openings had a rectangular shape. The openings had the maximum length a1 of 130 mm in the longitudinal direction X, the maximum length a2 of 8.4 mm in the circumferential direction Y, and the aspect ratio R of 15.47. The distance between two openings thereof was 18.75 mm. The total value B of areas of all the openings was 21.84 cm².

### (Example 4)

A spiral membrane element of Example 4 was produced in the same manner as in Example 1, except that a central tube made of an ABS resin presenting the developed view shown in FIG. 3E was used. The central tube used in Example 4 had twelve openings each extending in the longitudinal direction X of the central tube. The twelve openings were identical to each other in terms of shape and dimensions, and were arranged in a grid pattern. Specifically, there were four rows each composed of three openings arranged in the longitudinal direction X of the central tube, and these rows were arranged in the circumferential direction Y of the central tube. The openings had a rectangular shape. The openings had the maximum length a1 of 40 mm in the longitudinal direction X, the maximum length a2 of 4.2 mm in the circumferential direction Y, and the aspect ratio R of 9.52. The total value B of areas of all the openings was 21.32 cm².

### (Comparative Example 1)

A spiral membrane element of Comparative Example 1 was produced in the same manner as in Example 1, except that a central tube made of a stainless steel (SUS) presenting the developed view shown in FIG. 10B was used. The central tube used in Comparative Example 1 had 174 circular openings. These openings were identical to each other in terms of shape and dimensions and were arranged in a staggered pattern. The openings had a diameter of 4 mm. The total value B of areas of all the openings was 21.85 cm².

### <Evaluation on separation membrane in state of flat membrane>

The separation membrane used in each spiral membrane element was measured, in the state of a flat membrane, for the permeation rate T1 (GPU) of the carbon dioxide. The measurement of the permeation rate T1 was made by the following method using a differential pressure-type gas permeability measuring device (GTR-31AHND available from GTR TEC Corporation). First, the separation membrane that is in the state of a flat membrane was placed in a metal cell, and the metal cell was sealed with an O-ring so that no leakage would occur. The separation membrane had a membrane area of 3.14 cm². Next, a feed fluid was injected into the metal cell in such a manner that the feed fluid was in contact with the principal surface, on the separation functional layer side, of the separation membrane. The feed fluid injected into the metal cell had a temperature of 23°C and a pressure of 0.1 MPa. Next, a space adjacent to the principal surface, on the porous support member side, of the separation membrane was decompressed to approximately 10 kPa or less using a vacuum pump. Thereby, a permeated fluid was obtained from the principal surface, on the porous support member side, of the separation membrane. The permeation rate T1 of the carbon dioxide was calculated based on the composition of the obtained permeated fluid, the weight of the permeated fluid, etc. The composition, etc. of the permeated fluid were measured using gas chromatography (G2700T available from Yanako Technical Science Co., Ltd.).

### <Evaluation on spiral membrane element>

Next, the spiral membrane element was measured for the permeation rate T2 (T2-1 to T2-3) (GPU) of the carbon dioxide when being operated according to the pressurization method as well as for the permeation rate T3 (GPU) of the carbon dioxide when being operated according to the decompression method.

The permeation rate T2-1 was measured by the following method. First, a feed fluid was supplied to the feed fluid flow passage of the spiral membrane element. The feed fluid had a temperature of 23°C and a pressure of 0.1 MPa. Thereby, a permeated fluid was obtained via the central tube of the spiral membrane element. The permeation rate T2-1 of the carbon dioxide was calculated based on the flow rate, etc. of the obtained permeated fluid. The flow rate of the permeated fluid was measured using a soap film flow meter (available from HORIBA, Ltd.).

The permeation rate T2-2 was measured in the same manner as the permeation rate T2-1, except that the pressure of the feed fluid was changed to 0.3 MPa. The permeation rate T2-3 was measured in the same manner as the permeation rate T2-1, except that the pressure of the feed fluid was changed to 0.5 MPa.

The permeation rate T3 was measured in the same manner as the permeation rate T2-1, except that the pressure in the central tube of the spiral membrane element was decreased to approximately 10 kPa or less using a vacuum pump.

Next, a ratio R1-1 of the permeation rate T2-1 with respect to the permeation rate T1, a ratio R1-2 of the permeation rate T2-2 with respect to the permeation rate T1, a ratio R1-3 of the permeation rate T2-3 with respect to the permeation rate T1, and a ratio R2 of the permeation rate T3 with respect to the permeation rate T1 were calculated. Table 1 shows the results.

**[Table 1]**

| | Material of central tube | Openings of central tube | | | | | Operating method | Ratio R1-1 (%) |
|---|---|---|---|---|---|---|---|---|
| | | Shape | Aspect ratio | Total value B of areas (cm²) | Maximum length a2 in circumferential direction (mm) | Number of openings | | Ratio R1-2 (%) |
| | | | | | | | | Ratio R1-3 (%) |
| | | | | | | | | Ratio R2 (%) |
| Example 1 | SUS | rectangular | 30.95 | 21.84 | 4.2 | 4 | Pressurization (0.1 MPa) | 96.5 |
| | | | | | | | Pressurization (0.3MPa) | 97.9 |
| | | | | | | | Pressurization (0.5MPa) | 97.7 |
| | | | | | | | Decompression | 90.6 |
| Example 2 | SUS | rectangular | 61.90 | 21.84 | 2.1 | 8 | Pressurization (0.1 MPa) | 96.9 |
| | | | | | | | Pressurization (0.3MPa) | 97.3 |
| | | | | | | | Pressurization (0.5MPa) | 98.2 |
| | | | | | | | Decompression | 89.3 |
| Example 3 | SUS | rectangular | 15.47 | 21.84 | 8.4 | 2 | Pressurization (0.1 MPa) | 93.6 |
| | | | | | | | Pressurization (0.3MPa) | 92.1 |
| | | | | | | | Pressurization (0.5MPa) | 91.3 |
| | | | | | | | Decompression | 84.4 |
| Example 4 | ABS resin | rectangular | 9.52 | 21.32 | 4.2 | 12 | Pressurization (0.1MPa) | 91.8 |
| | | | | | | | Pressurization (0.3MPa) | 96.3 |
| | | | | | | | Pressurization (0.5MPa) | 99.0 |
| | | | | | | | Decompression | 83.7 |
| Comparative Example 1 | SUS | circular | - | 21.85 | 4 (*1) | 174 | Pressurization (0.1 MPa) | 89.0 |
| | | | | | | | Pressurization (0.3MPa) | 88.2 |
| | | | | | | | Pressurization (0.5MPa) | 89.0 |
| | | | | | | | Decompression | 83.2 |

| | | | | | | | | |
|---|---|---|---|---|---|---|---|---|
| (*1) Diameter of opening | | | | | | | | |

Table 1 reveals that the values of the ratios R1-1 to R1-3 and R2 are different depending on the shape of the openings even when the central tubes have almost the same total value B of areas of all the openings. As understood from Table 1, the spiral membrane element of each of the Examples employing the central tube having openings each extending in the longitudinal direction X had higher values of the ratios R1-1 to R1-3 and R2 than those of the Comparative Example 1 when compared under the same operating method conditions. Furthermore, the spiral membrane element of each of the Examples 1 and 2 had particularly high values of the ratios R1-1 to R1-3 and R2. Accordingly, the spiral membrane element of each of the Examples was suitable for suppressing a decrease in the permeation rate of the permeated fluid from the separation membrane.

As understood from Examples 1 to 4, a metal and a resin were each able to be used as a material of the central tube. It is inferred that the values of the ratios R1-1 to R1-3 and R2 depend only on the shape and dimensions of the openings of the central tube and do not depend on the material of the central tube.

### INDUSTRIAL APPLICABILITY

The spiral membrane element of the present embodiment is suitable for separating an acid gas from a gas mixture containing the acid gas. In particular, the spiral membrane element of the present embodiment is suitable for separating carbon dioxide from an off-gas of a chemical plant or a thermal power plant.

## Claims

1. A spiral membrane element comprising:
a central tube; and
a separation membrane that is wound around the central tube, wherein
the central tube has an opening for guiding, to an inside of the central tube, a permeated fluid having permeated through the separation membrane, and
the opening extends in a longitudinal direction of the central tube.

2. The spiral membrane element according to claim 1, wherein the opening has a rectangular shape.

3. The spiral membrane element according to claim 1, wherein the opening has an aspect ratio R satisfying 1 < R ≤ 1000.

4. The spiral membrane element according to claim 1, wherein the opening has a maximum length of 1 mm to 10 mm in a circumferential direction of the central tube.

5. The spiral membrane element according to claim 1, wherein the central tube has a plurality of the openings.

6. The spiral membrane element according to claim 5, wherein the openings are arranged in a circumferential direction of the central tube.

7. The spiral membrane element according to claim 5, wherein the number of the openings that the central tube has is 2 to 64.

8. The spiral membrane element according to claim 1, comprising a membrane leaf having the separation membrane and a permeation spacer, wherein
the membrane leaf is wound around the central tube.

9. The spiral membrane element according to claim 8, wherein
the membrane leaf has two pieces of the separation membranes, and
the two pieces of the separation membranes are stacked with each other and sealed in such a manner as to have a bag-like structure.

10. The spiral membrane element according to claim 9, wherein the permeation spacer is disposed between the two pieces of the separation membranes.

11. The spiral membrane element according to claim 8, further comprising a feed spacer laminated on the membrane leaf.

12. The spiral membrane element according to claim 8, further comprising a flow passage spacer that is connected to the permeation spacer and is wound around the central tube on a side closer to the central tube than the membrane leaf is.

13. The spiral membrane element according to claim 12, wherein the flow passage spacer is in contact with the opening.

14. The spiral membrane element according to claim 1, wherein the separation membrane has:
a separation functional layer;
a porous support member supporting the separation functional layer; and
an intermediate layer that is disposed between the separation functional layer and the porous support member.

15. The spiral membrane element according to claim 1, wherein the spiral membrane element is used for processing a gas.

16. The spiral membrane element according to claim 1, wherein the spiral membrane element is used for separating carbon dioxide from a gas mixture containing carbon dioxide and nitrogen.

17. A membrane separation system comprising:
the spiral membrane element according to any one of claims 1 to 16; and
a decompression device that decompresses the inside of the central tube.
